Europäisches Patentamt

(19) European Patent Office

Office européen des brevets

(11) EP 0 892 522 A1

(12) **EUROPEAN PATENT APPLICATION**

(43) Date of publication:
20.01.1999 Bulletin 1999/03

(51) Int. Cl.$^6$: **H04L 12/00**, H04L 12/56

(21) Application number: 97401706.3

(22) Date of filing: 15.07.1997

(84) Designated Contracting States:
AT BE CH DE DK ES FI FR GB GR IE IT LI LU MC
NL PT SE

(71) Applicant:
ALCATEL ALSTHOM COMPAGNIE GENERALE
D'ELECTRICITE
75008 Paris (FR)

(72) Inventor: Van Mieghem, Piet
3210 Lubbeek (BE)

(74) Representative: Narmon, Gisèle
Industrial Property Department,
Alcatel Bell N.V.,
Francis Wellesplein 1
2018 Antwerpen (BE)

(54) **Method and arrangement to aggregate parameter information in a hierarchically structured network**

(57)    To aggregate parameter information related to links and nodes (A.1, A.2, A.3, A.4, A.5, A.6, A.7, A.8) of a subnetwork (SNA) on a first hierarchical level (L1) of a hierarchically structured network, this parameter information is separated in balanced parameter information and unbalanced parameter information. The balanced parameter information is condensed using either heuristic or mathematical techniques. In this way, a first port of parameter information (X1, X2, X3, X4) related to virtual links of a virtual complex node (A) which represents the subnetwork (SNA) on a second hierarchical level (L2) of the network is generated. This second hierarchical level (L2) is a condensed abstraction of the first hierarchical level (L1). The unbalanced parameter information of the subnetwork (SNA) is advertised uncondensed in the virtual complex node (A) by adding exceptional virtual links to this virtual complex node (A). In this way, a second part of the parameter information of the virtual complex node (A) is generated.

Fig. 1

EP 0 892 522 A1

## Description

The present invention relates to a method to aggregate parameter information in a hierarchically structured network as defined in the preamble of claim 1, and to an arrangement able to perform this method as defined in the preamble of claim 17.

Such a method and arrangement are already known in the art, e.g. from *the United States Patent with patent number US 5,535,195 from assignee Motorola, Inc. This patent is entitled 'Method for Efficient Aggregation of Link Metrics'.*

In the known information aggregation method, a subnetwork leader condenses parameter information related to links of a subnetwork, named link metric information. More particularly, the subnetwork leader condenses delay information and bandwidth information related to the links of the subnetwork whereof it is the leader. As a result, link metric information is generated for virtual links of a virtual complex node which represents the subnetwork in a condensed way on a higher hierarchical level of the network. This virtual complex node is named virtual topology in the cited US Patent. The link metric information of the virtual complex node on the higher hierarchical level, a condensed version of the link metric information of the subnetwork, is advertised wider in the network than the link metric information of the subnetwork. The combination of a hierarchical structure and information condensation is thus based on the principle stating that the immediate neighbourhood is desired to be known in greater detail than the farther surroundings.

According to the known method, a virtual complex node or virtual topology is generated for each parameter or link metric. Thus, for a subnetwork a first virtual topology is generated for aggregation of delay information and a second virtual topology is generated for the aggregation of bandwidth information. Applying this method in a hierarchically structured ATM (Asynchronous Transfer Mode) communications network to condense information with respect to up to eleven quality of service parameters would result in up to eleven different virtual topologies for each subnetwork. The complex nature of such condensed information indisputably would make it difficult to use this information later on, for instance when an optimal path has to be set up from an originating node in a first subnetwork to a destination node in a second subnetwork.

Moreover, the paragraph from line 46 to line 65 in column 6 and the paragraph from line 33 to line 56 in column 7 of the above mentioned US Patent indicate that heuristic techniques are used in the known method to aggregate the delay and bandwidth information. A skilled person however will appreciate that, given a certain accuracy for the condensed information in the virtual complex node to be achieved, such heuristic techniques can not guarantee to provide maximal condensation of information.

An object of the present invention is to provide a method and arrangement for information aggregation of the above known type, but which generate less complex condensed information, especially when information of more than one parameter has to be aggregated, and which realise a maximum degree of information condensation, given a certain accuracy for the visibility of the underlying subnetwork from the condensed information to be achieved.

According to the present invention, this object is achieved by the method defined in claim 1 and the arrangement defined in claim 17.

Indeed, if unbalanced information, for instance a very short delay between an input node and an output node of a subnetwork, is not excluded for condensation, condensation of the parameter information in the subnetwork becomes a mathematically badly constrained problem whose solutions are unacceptable. Hence, without pre-selecting unbalanced parameter information and excluding it for condensation, the only way to solve the condensation problem is a heuristic one. By determining in a previous step which parameter information is balanced and which parameter information is unbalanced, the condensation process can be restricted to the balanced information as a consequence of which acceptable, less complex interpretable condensed parameter information is generated. If moreover the condensation process is based on mathematical instead of heuristic techniques, the degree of condensation can be maximized. The unbalanced information, excluded for condensation, for evident reasons also has to be visible on the higher hierarchical level. This is realized, according to the present invention, by advertising the unbalanced parameter information in an uncondensed way in the form of parameter information related to exceptional virtual links of the virtual complex node. For ATM (Asynchronous Transfer Mode) communication networks, the PNNI (Private Network-Network Interface) Specification, Version 1.0, clearly specifies in paragraph 3.3.8, from page 23 to page 25, what is understood by default virtual links and exceptional virtual links for a virtual complex node.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noted that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

An additional feature of the present method is defined in claim 2.

Thus, although a maximal degree of condensation cannot be guaranteed thereby, heuristic condensation techniques such as those described in the cited US Patent, may still be used to condense balanced parameter information and generate therefrom less complex condensed information than that of the known method.

Another additional feature of the method according to the present invention is defined in claim 3.

In this way, maximal condensation can be achieved, given a certain accuracy for the condensed information. For each input/output characteristic value, for example the delay on a path in the subnetwork from an input to an output of that subnetwork, a mathematical equation is built up, stating that this input/output characteristic value has to be the same in the virtual complex node as in the subnetwork. A near-optimal solution found by solving the set of equations constituted this way then ensures maximal condensation.

Yet another feature of the present invention is defined in claim 4.

A mathematical equation is built up for each optimal characteristic value amongst different paths. More concrete, for the case of delay information to be condensed, this means that a mathematical equation is built up stating that the delay to go from a particular input to a particular output of the virtual complex node has to be equal to the minimum delay over all paths between this input and output. Such an equation can be written for each input/output pair and for each parameter (delay, bandwidth, hop count, ...).

Still a feature of the present invention is defined in claim 5.

Indeed, for additive parameters such as delay or cell loss ratio (after a transformation), the characteristic value related to a certain path between an input and an output is obtained by summing the parameter information of the individual links which constitute that path. When more then one additive parameter, for instance the delay along a path and the cell loss ratio along that path, have to be optimized, the single additive parameter case is straightfowardly extended using a block matrix representation.

Alternatively, a feature of the present invention is defined in claim 6.

Indeed, for minimization parameters or maximization parameters such as the available bandwidth, the characteristic value related to a certain path between an input and an output is obtained by either minimizing or maximizing the parameter information of the individual links which constitute that path.

Furthermore an additional feature of the present invention is defined in claim 7.

Indeed, parameter information may be considered unbalanced and may therefore be expressed via an exceptional link on a higher hierarchical level when its magnitude falls outside a certain range wherein most of the remaining parameter information falls. A path with a very short delay between an input and output of a subnetwork for instance is considered exceptional and will therefore be represented by an exceptional link between a corresponding input and a corresponding output of the virtual complex node which represents this subnetwork on a higher hierarchical level. To the exceptional link, the short delay value will be associated. If however not only the delay information has to be condensed, the parameter information related to a path between on input and output of a subnetwork can be grouped into a parameter vector with more than one component. The magnitude of this vector can then be calculated to be able to determine whether the parameter information grouped therein is balanced or unbalanced.

Yet another additional feature of the method according to the present invention is defined by claim 8.

In this way, a simple magnitude metric is used to determine the balanced and unbalanced parameter information amongst the parameter information of the subnetwork. Obviously, lots of alternative magnitude metrics can be used to classify the parameter information in balanced and unbalanced information. If some components of a parameter vector, for instance, have more influence on the balanced or unbalanced nature, a weighted metric wherein the different components of the vector are multiplied with different factors, is to be preferred.

Still an additional feature of the present method is defined in claim 9.

In this way, all information that has a magnitude outside a predetermined range is excluded for condensation. This may not lead to the highest degree of condensation since information that could be condensed, may be expressed uncondensed. Anyhow, this implementation of the present method is quick in separating unbalanced from balanced parameter information.

Also an advantageous feature of the present invention is defined in claim 10.

In this way, the highest degree of information condensation can be obtained since unbalanced information is separated step by step from balanced parameter information. If one starts separating the most unbalanced parameter information, one can already try to condense the remaining information. If this condensation results in unacceptable condensed parameter information, the remaining parameter information was not yet balanced. The criterion for balanced parameter information in that case has to be mode more severe so that new unbalanced information is excluded for condensation. This procedure is iteratively repeated until the condensed balanced information ends up in acceptable results.

A further advantageous feature of the present method is defined by claim 11.

Thus, if the condensed information is insufficiently accurate so that the input/output characteristic values of the underlying subnetwork cannot be approximated sufficiently close from this condensed information, less information has to be condensed or, in other words, more information should be excluded for condensation. In this way, given a certain accuracy to be achieved, maximal condensation can be obtained by iteratively converging towards this accuracy.

Furthermore, an advantageous feature of the method according to the present invention is defined in claim 12.

The square error per component of the parameter information vector may be used for example to determine the quality of the condensed parameter information.

Another advantageous feature of the present method is defined in claim 13.

Hence, the probability distribution of the component errors can be used so that a statistical measure determines whether unbalanced information is sufficiently separated from balanced parameter information or not.

Moreover, an advantageous feature of the present invention is defined in claim 14.

It is to be remarked that although attention was concentrated on application of the present invention in communications networks in the previous paragraphs, applicability of the present information aggregation method certainly is not limited to such kinds of networks. To be able to find an optimal route from a first location to a second location for example, a traffic network built up of streets (links) and crossings (nodes) may be given a hierarchical structure so that the principle stating that the close neighbourhood is known in more detail than the farther areas is respected. The actual rush of traffic in the different streets, the average waiting time in front of traffic lights, the maximum allowable speed, and so on, can be considered as parameter information related to links and nodes of the traffic network. Aggregation of this parameter information between different hierarchical layers can be realised efficiently according to the present invention.

A further characteristic feature of the aggregation method according to the present invention is claimed in claim 15.

Thanks to such an additional step, the phase of node aggregation (i.e. condensation from subnetwork parameter information into virtual complex node information) is followed by a phase of link aggregation wherein the information of the higher hierarchical level is even more reduced. It will become clear later on from the description, that this additional phase of link aggregation can have a significantly condensing effect on the remaining information.

Still a characteristic feature of the present invention is defined in claim 16.

Thus, if the PNNI (Private Network-Network Interface) Specification is respected, the virtual complex nodes have a structure with a fictitious gravity point, named the nucleus on *page 24 of the already cited Version 1 of the Specification*. An optimal path between two virtual complex nodes then can be defined as a path from the nucleus of the first virtual complex node to the nucleus of the second virtual complex node with an optimal characteristic value. In terms of delay information to be condensed, the optimal path would be a path constituted by virtual links, default or exceptional ones, which interconnects the nuclei of the two virtual complex nodes and which has a minimal global delay. If only this optimal path is maintained between the two virtual complex nodes, all virtual links, default or exceptional ones, which do not form part of this optimal path may be removed.

The above mentioned and other objects and features of the invention will become more apparent and the invention itself will be best understood by referring to the following description of an embodiment taken in conjunction with the accompanying drawings wherein:

Fig. 1 is a scheme of a hierarchically structured network segment, wherein the method according to the present invention is applied;

Fig. 2 is a scheme illustrating the structure of the virtual complex nodes A and B of Fig. 1;

Fig. 3 is a scheme of the virtual complex nodes A and B after condensation of delay information of subnetwork SNA of Fig. 1 and condensation of delay information of subnetwork SNB in Fig. 1 in accordance with a first implementation of the present invention;

Fig. 4 is a scheme of the second hierarchical level L2 of the network segment of Fig. 1 after information aggregation according to the first implementation of the present invention;

Fig. 5 is a scheme illustrating the structure of virtual complex node A after a first iteration step in a second implementation of the method according to the present invention;

Fig. 6 is a scheme illustrating the structure of virtual complex node A after a second iteration step in the second implementation of the method according to the present invention;

Fig. 7 is a scheme illustrating the structure of virtual complex node B after 5 iteration steps in the second implementation of the method according to the present invention;

Fig. 8 is a scheme of the virtual complex nodes A and B after condensation of delay information of subnetwork SNA of Fig. 1 and condensation of delay information of subnetwork SNB in Fig. 1 in accordance with the second implementation of the present invention;

Fig. 9 is a scheme of the second hierarchical level L2 of the network segment of Fig. 1 after information aggregation according to the second implementation of the present invention;

Fig. 10 is a scheme of a more complex hierarchically structured network wherein the method according to the present invention is applied.

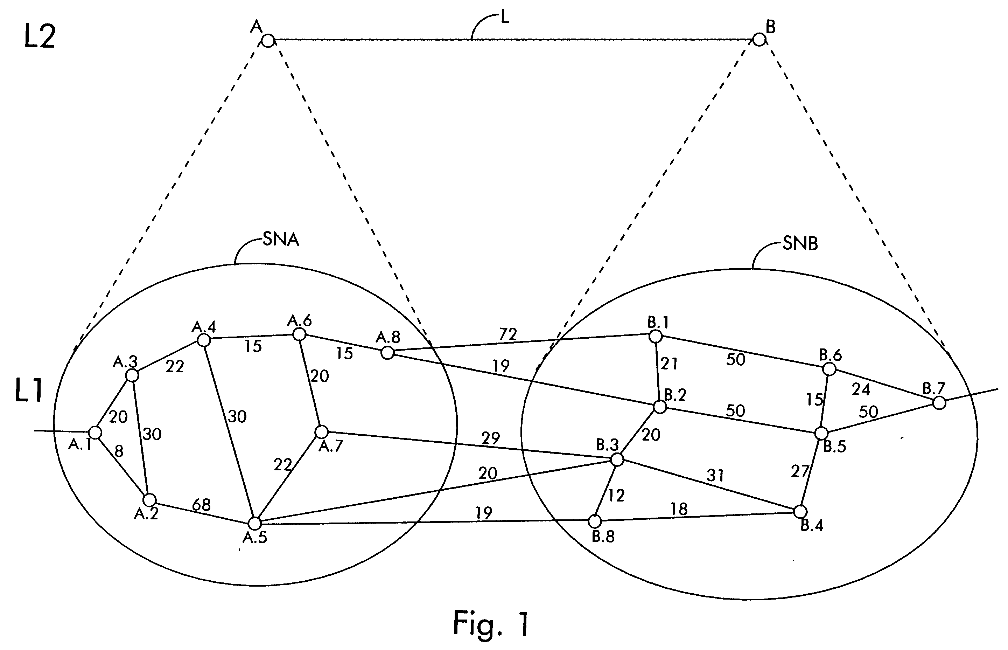

In Fig. 1, part of an ATM (Asynchronous Transfer Mode) communications network is drawn with two hierarchical levels, L1 and L2. The first hierarchical level L1 comprises switching nodes A.1, A.2, A.3, A.4, A.5, A.6 , A.7, A.8, B.1, B.2, B.3, B.4, B.5, B.6, B.7, B.8 and links interconnecting these nodes. All links are bi-directional and symmetrical. This means that if the delay to transfer an ATM cell from node A.1 to node A.2 takes 8 time units, the transfer delay for an ATM cell from node A.2 to node A.1 also counts 8 time units. With each link of the lowest hierarchical level L1, a transfer delay figure is associated in Fig. 1. Between A.1 and A.2, A.1 and A.3, A.2 and A.3, A.2 and A.5, A.3 and A.4, A.4 and A.5, A.4 and A.6, A.5 and A.7, A.6 and A.7, A.6 and A.8, A.5 and B.3, A.5 and B.8, A.7 and B.3, A.8 and B.1, A.8 and B.2, B.1 and B.2, B.1 and B.6, B.2 and B.3, B.2 and B.5, B.3 and B.4, B.3 and B.8, B.4 and B.5, B.4 and B.8, B.5 and B.6, B.5 and B.7, and B.6 and B.7 this transfer delay respectively equals 8, 20, 30, 68, 22, 30, 15, 22, 20, 15, 20, 19, 29, 72, 19, 21, 50, 20, 50, 31, 12, 27, 18, 15, 50 and 24 time units respectively. The nodes A.1, A.2, A.3, A.4, A.5, A.6, A.7 and A.8 form part of a first subnetwork SNA which is represented on the second hierarchical level L2 by vertical complex node A. Similarly, the nodes B.1, B.2, B.3, B.4, B.5, B.6, B.7 and B.8 form part of a second subnetwork SNB which is represented on the second hierarchical level L2 by virtual complex node B. The virtual complex nodes A and B are coupled via a virtual link L on the second hierarchical level L2.

The virtual complex nodes A and B together with the virtual link L represent a condensed abstraction of the subnetworks SNA and SNB of the first hierarchical level L1. The delay information related to the links between nodes of subnetwork SNA is known by the nodes of subnetwork SNA and can be used by these nodes when a connection has to be established between two nodes of this subnetwork SNA. Similarly, the delay information related to the links between nodes of subnetwork SNB is known by the nodes of subnetwork SNB and can be used by these nodes when a connection has to be established between two nodes of this subnetwork SNB. If however a connection has to be established between node A.1 of subnetwork SNA and node B.7 of subnetwork SNB, the node A.1 needs additional information: information with respect to the delay of links in subnetwork SNB, so that an optimal route from node A.1 to B.7 can be established. For this reason, the delay information of links in subnetwork SNA is condensed into delay information of virtual complex node A, the delay information of links in subnetwork SNB is condensed into delay information of virtual complex node B, and delay information of links in between subnetworks SNA and SNB is condensed into delay information related to link L. The condensation for subnetwork SNA is performed by the network leader, which is supposed to be A.4, of subnetwork SNA, and the condensation for network SNB is performed by the network leader of subnetwork SNB, which is supposed to be B.5. The condensed information on the higher level L2 is known by the two subnetwork leaders, A.4 and B.5. Thus A.4 is aware of the condensed delay information that is related to virtual complex nodes A and B, and the virtual link L. This information can be consulted by node A.1 to set up the connection between A.1 and B.7. The accurateness of this information is important since less accurate information will lead to selection of a path from A.1 to B.7 which is not the path with the shortest transfer delay. The accurateness of the condensed information depends on the structure of the virtual complex nodes A and B and on the aggregation method that is used to condense the delay information related to links and nodes on hierarchical level L1 into delay information related to virtual links of the complex nodes A and B.

The structure of the virtual complex nodes A and B is that defined in the *PNNI (Private Network-Network Interface) Specification of the ATM Forum, more particularly in paragraph 3.3.8 from page 23 to 25 of Version 1 of this Specification. This Version 1 was published in March 1996 by the ATM Forum Technical Committee.* According to this Specification, a virtual complex node consist of a fictive nucleus, default virtual links named spokes which interconnect the nucleus with an input or output corresponding to an ingress or egress node of the underlying subnetwork and exceptional links which interconnect an input and output corresponding to an ingress and egress node of the underlying subnetwork respectively. The ingress and egress nodes of the underlying subnetwork are respectively input and output nodes of the subnetwork via which the subnetwork is coupled to other subnetworks.

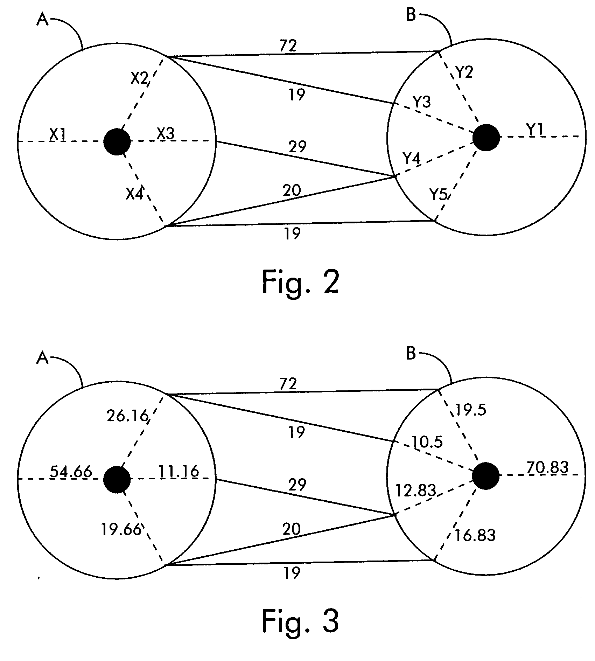

Fig. 2 shows the structure of virtual complex nodes A and B of Fig. 1. Since subnetwork SNA contains 4 ingress/egress nodes, A.1, A.5, A.7 and A.8, the corresponding virtual complex node A consists of a nucleus with 4 default virtual links. These 4 default virtual links are spokes whereto delay values X1, X2, X3 and X4 are associated. Subnetwork SNB on the other hand contains 5 ingress/egress nodes, B.1, B.2, B.3, B.8 and B.7 and therefore is represented on the second hierarchical level L2 by a virtual complex node B with a nucleus and 5 default virtual links. These 5 defaults virtual links are the spokes in Fig. 2 whereto delay values Y1, Y2, Y3, Y4 and Y.5 are associated. In Fig. 2 the information related to the links between subnetwork SNA and subnetwork SNB is not yet condensed. First, it will be explained how, according to the present invention, the delay information of subnetwork SNA is condensed into the four delay values X1, X2, X3 and X4 and how the delay information of subnetwork SNB is condensed into the five delay values Y1, Y2, Y3, Y4 and Y5. Later on, it will be explained how the delay information with respect to links in between the subnetworks SNA and SNB is condensed.

To start condensing the information of subnetwork SNA, the shortest path between any couple of ingress/egress nodes of subnetwork SNA is determined. The shortest path can be found by calculating the delay for each path between a particular ingress and egress node for instance by using the well-known Dijkstra algorithm. All shortest path delay values can be grouped in a vector F as follows:

$$F = \begin{bmatrix} 72 \\ 77 \\ 72 \\ 35 \\ 57 \\ 22 \end{bmatrix} \qquad\qquad (1)$$

where the components give the shortest path delay between A.1 and A.8, A.1 and A.7, A.1 and A.5, A.8 and A.7, A.8 and A.5, and A.7 and A.5 respectively.

Since all delay values in subnetwork SNA are comparable, all information is said to be balanced. As a consequence, no information is excluded for condensation in this first approach.

In a mathematical way, one can express that the delay between the input of virtual complex node A that corresponds to node A.1 and the output of virtual complex node A that corresponds to node A.8 has to equal 72 time units by the equation:

$$X1 + X2 = 72 \qquad\qquad (2)$$

For the five other delay values in vector F, each of which corresponds to a shortest path between an ingress and egress node of the subnetwork SNA, similar equations can be constituted:

$$\begin{cases} X1 + X3 = 77 \\ X1 + X4 = 72 \\ X2 + X3 = 35 \\ X2 + X4 = 57 \\ X3 + X4 = 22 \end{cases} \qquad\qquad (3)$$

The six equations in (2) and (3) bound the parameters X1, X2, X3 and X4, and can be expressed in matrix formulation as follows:

$$\begin{pmatrix} 1 & 1 & 0 & 0 \\ 1 & 0 & 1 & 0 \\ 1 & 0 & 0 & 1 \\ 0 & 1 & 1 & 0 \\ 0 & 1 & 0 & 1 \\ 0 & 0 & 1 & 1 \end{pmatrix} \cdot \begin{pmatrix} X1 \\ X2 \\ X3 \\ X4 \end{pmatrix} = \begin{pmatrix} 72 \\ 77 \\ 72 \\ 35 \\ 57 \\ 22 \end{pmatrix} \qquad\qquad (4)$$

Introducing the notation:

$$M = \begin{pmatrix} 1 & 1 & 0 & 0 \\ 1 & 0 & 1 & 0 \\ 1 & 0 & 0 & 1 \\ 0 & 1 & 1 & 0 \\ 0 & 1 & 0 & 1 \\ 0 & 0 & 1 & 1 \end{pmatrix} \quad (5)$$

and

$$X = \begin{pmatrix} X1 \\ X2 \\ X3 \\ X4 \end{pmatrix} \quad (6)$$

matrix expression (4) can be rewritten as:

$$M.X = F \quad (7)$$

The latter expression (7) represents a set of 6 equations in 4 unknowns and is thus a mathematically overconstrained problem. The best solution (best in the sense of minimizing the least square error) for this problem can be found by calculating X as follows:

$$X = (M^T.M)^{-1}.M^T.F \quad (8)$$

Herein, $M^T$ represents the transposed matrix of M. Substituting (1) and (5) in (8) results in:

$$X = \begin{pmatrix} 54.66 \\ 26.16 \\ 11.16 \\ 19.66 \end{pmatrix} \quad (9)$$

The values calculated for X1, X2, X3 and X4 are all positive and thus acceptable as delay values for the virtual links of virtual complex node A.

A measure for the quality or accuracy of the condensed information X can be obtained by multiplying matrix M with matrix X since this results in delay values between inputs and outputs of the virtual complex node A which should approximate the optimal delay values determined here above for subnetwork SNA and stored in vector F. Multiplying matrices M and X gives the following result:

7

$$M.X = \begin{pmatrix} 80.33 \\ 65.83 \\ 74.33 \\ 37.33 \\ 45.83 \\ 30.83 \end{pmatrix} \quad (10)$$

so that the error between the delay values calculated from the condensed information X and the delay values of the optimal paths in subnetwork SNA, found by subtracting vector F from the just calculated vector M.X, is given by:

$$M.X - F = \begin{pmatrix} 8.83 \\ -11.16 \\ 2.3 \\ 2.3 \\ -11.16 \\ 8.83 \end{pmatrix} \quad . \quad (11)$$

Completely similar to the process followed for subnetwork SNA, the delay information of subnetwork SNB can be condensed into delay values Y1, Y2, Y3, Y4 and Y5 of the virtual links of virtual complex node B. The vector F' which contains the delay values of the shortest paths in subnetwork SNB between nodes B.1 and B.7, B.2 and B.7, B.3 and B.7, B.8 and B.7, B.1 and B.2, B.1 and B.3, B.1 and B.8, B.2 and B.3, B.2 and B.8, and B.3 and B.8 is equal to:

$$F' = \begin{pmatrix} 101 \\ 86 \\ 79 \\ 91 \\ 21 \\ 41 \\ 53 \\ 20 \\ 32 \\ 12 \end{pmatrix} \quad (12)$$

Ten equations express that the delays between corresponding inputs and outputs of the virtual complex node B have to equal those of matrix F', and in matrix formulation look like:

$$M'.Y = F' \quad (13)$$

Herein:

$$M' = \begin{pmatrix} 1 & 1 & 0 & 0 & 0 \\ 1 & 0 & 1 & 0 & 0 \\ 1 & 0 & 0 & 1 & 0 \\ 1 & 0 & 0 & 0 & 1 \\ 0 & 1 & 1 & 0 & 0 \\ 0 & 1 & 0 & 1 & 0 \\ 0 & 1 & 0 & 0 & 1 \\ 0 & 0 & 1 & 1 & 0 \\ 0 & 0 & 1 & 0 & 1 \\ 0 & 0 & 0 & 1 & 1 \end{pmatrix} \tag{14}$$

and

$$Y = \begin{pmatrix} Y1 \\ Y2 \\ Y3 \\ Y4 \\ Y5 \end{pmatrix} \tag{15}$$

These bounds on the parameters Y1, Y2, Y3, Y4 and Y5 again form an overconstrained problem which has no exact solution. The best (least square error minimization) solution for Y is found by:

$$Y = (M'^{T}.M')^{-1}.M'^{T}.F' \tag{16}$$

After substitution of (12) and (14) in (16) the Y vector found is equal to:

$$Y = \begin{pmatrix} 70.83 \\ 19.5 \\ 10.5 \\ 12.83 \\ 16.83 \end{pmatrix} \tag{17}$$

All values in Y are positive and thus also acceptable as delay values. Concluding, the choice to consider all information as balanced was good for subnetwork SNA as well as for subnetwork SNB.

The accuracy of the condensed information Y of virtual complex node SNB is evaluated by determining the delay values for paths through subnetwork SNB from the condensed information Y and comparing these delay values with the delay values of the shortest paths through subnetwork SNB, contained in vector F'. The values calculated from the condensed information Y are found by:

$$M'. Y = \begin{pmatrix} 101.66 \\ 82.66 \\ 80.33 \\ 92.33 \\ 35.66 \\ 33.33 \\ 45.33 \\ 14.33 \\ 26.33 \\ 24 \end{pmatrix} \qquad (18)$$

and the errors thereof when compared to the optimal values in vector F' are contained by the following vector:

$$M'.Y-F' = \begin{pmatrix} 0.66 \\ -3.34 \\ 1.33 \\ 1.33 \\ 14.66 \\ -7.67 \\ -7.67 \\ -5.67 \\ -5.67 \\ 12 \end{pmatrix} \qquad (19)$$

Fig. 3 shows the results of information condensation of the delay information in subnetworks SNA and SNB.

In a second phase, the condensation of information from hierarchical level L1 to hierarchical level L2 is terminated by aggregating the delay information related to links in between subnetwork SNA and subnetwork SNB. Instead of five delay values and five links in between virtual complex node A and virtual complex node B, as drawn in Fig. 3, only one link L and one associated delay value should remain, as drawn in Fig. 1. Determining this one value for link L is easy since there was no unbalanced information and hence no exceptional links are advertised in virtual complex nodes A and B. To select the value for link L, the delay between the two nuclei of the virtual complex nodes A and B is minimized. In Fig. 2 and Fig. 3, five paths exist between the two nuclei. These paths have respective delays:

$$X2 + 72 + Y2 = 117.66 \qquad (20)$$

$$X2 + 19 + Y3 = 55.66$$

$$X3 + 29 + Y4 = 52.99$$

$$X4 + 20 + Y4 = 52.49$$

$$X4 + 19 + Y5 = 55.49$$

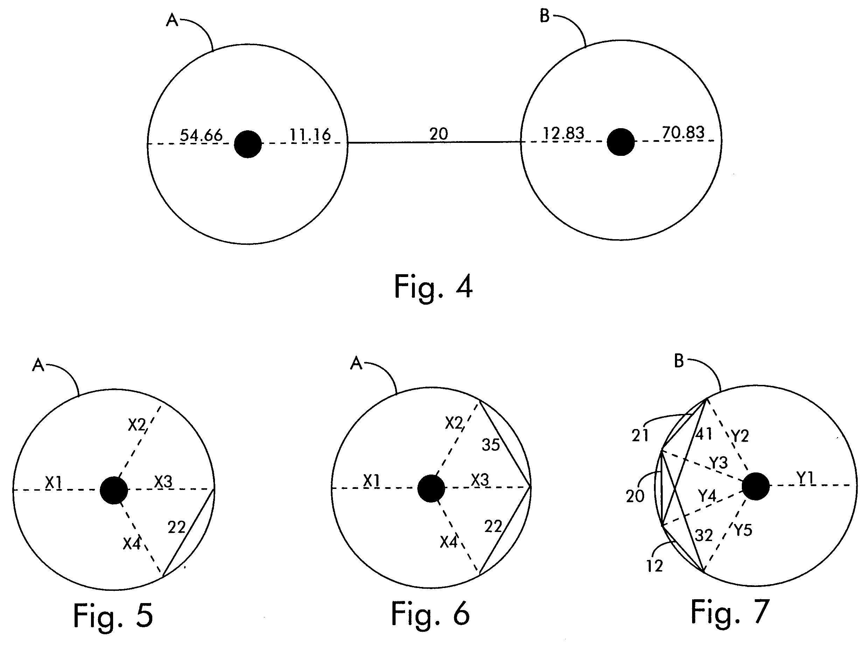

The fourth path via the spoke with delay X4, the link with delay 20 and the spoke with delay Y4 is the shortest and consequently the one maintained between virtual nodes A and B. The result of node and link information aggregation of the network segment drawn in Fig. 1, is shown in Fig. 4. The delay for a connection from node A.1 to node B.7 calculated from this condensed information is equal to 177.98 time units, whereas the delay of the shortest path that would be calculated if all information of the lowest hierarchical level L1 was available, would be 175 time units. Concluding, the condensed information allows to compute a quite accurate path delay for paths between nodes of different subnetworks.

In the above described implementation of the present invention, any delay value for a virtual link of the virtual complex nodes A and B was said to be acceptable provided that it was a positive value. The quality of these positive values, i.e. the degree of accurateness with which path delays can be calculated from the condensed information, was not used as a criterion to separate balanced information from unbalanced information. In the above given example, all information was determined to be balanced since the only condition to be checked, the positivity of the condensed information, was fulfilled.

Suppose now that the same examplary network segment of Fig. 1 is subjected to an implementation of the present invention wherein a quality measure is used for determination of balanced and unbalanced information. In this new approach of the present invention, the delay values for paths between inputs and outputs of a virtual complex node A have to approach the optimal values that can be calculated from the information in the underlying subnetwork SNA to within 10 %. If this is not the case for all input/output combinations, not all information used for condensation was balanced. The minimum component in vector F then is considered to be unbalanced and will be advertised on the higher level L2 via an exceptional link. This minimal component of F corresponds to the path between an input and output of the subnetwork SNA with shortest delay. This shortest delay will no longer be taken into account for the condensation process, which means that the corresponding equation will be removed from (2) and (3) and the new, less overconstrained set of equations is solved to deduce therefrom a new X vector which is again evaluated. In the following paragraphs, the implementation of the present invention with additional accuracy constraint of 10% is illustrated with figures.

In a first phase, it is again supposed that all information is balanced. This results in a vector X equal to the one in expression (9). As already explained, the errors between path delays calculated from the condensed information X and path delays calculated from the uncondensed information in hierarchical level L1 is given by (11). For the first path, the path between A.1 and A.8, the delay determined from the condensed information equals 80.33 time units whereas the shortest path delay between A.1 and A.8 in fact equals 72 time units. The relative error, which equals

$$\frac{80.33 \text{-} 72}{72} = \frac{8.33}{72} = 0.12,$$

is greater than 10 % and thus the condensed information obtained is not acceptable. The smallest value in F equals 22 (see expression (1)), and therefore an exceptional link has to be advertised in virtual complex node A with this value. This exceptional link is, respecting the PNNI Specification, a link between the input/outputs of node A corresponding to the nodes A.5 and A.7 in subnetwork SNA. In Fig. 5, this exceptional link is drawn. The equation in (2) and (3) corresponding to this value 22 is eliminated so that the condensation phase now is reduced to solving the set of equations:

$$\begin{pmatrix} 1 & 1 & 0 & 0 \\ 1 & 0 & 1 & 0 \\ 1 & 0 & 0 & 1 \\ 0 & 1 & 1 & 0 \\ 0 & 1 & 0 & 1 \end{pmatrix} \cdot \begin{pmatrix} X1 \\ X2 \\ X3 \\ X4 \end{pmatrix} = \begin{pmatrix} 72 \\ 77 \\ 72 \\ 35 \\ 57 \end{pmatrix} \tag{21}$$

The matrix M of (5) is thus adapted to:

$$M = \begin{pmatrix} 1 & 1 & 0 & 0 \\ 1 & 0 & 1 & 0 \\ 1 & 0 & 0 & 1 \\ 0 & 1 & 1 & 0 \\ 0 & 1 & 0 & 1 \end{pmatrix} \tag{22}$$

and the vector F of (1) is modified to:

$$F = \begin{pmatrix} 72 \\ 77 \\ 72 \\ 35 \\ 57 \end{pmatrix} \tag{23}$$

A near-optimal solution for this still overconstrained problem is found by formula (8) and is equal to:

$$X = \begin{pmatrix} 50.25 \\ 21.75 \\ 20 \\ 28.5 \end{pmatrix} \tag{24}$$

The quality of this condensed information is determined by calculating M.X:

$$M.X = \begin{pmatrix} 72 \\ 70.25 \\ 78.75 \\ 41.75 \\ 50.25 \end{pmatrix} \tag{25}$$

This vector M.X contains the path delays calculated from the condensed information X and has to be compared with the optimal delay values in the new F-vector of expression (23):

$$M.X - F = \begin{pmatrix} 0 \\ -6.75 \\ 6.75 \\ 6.75 \\ -6.75 \end{pmatrix} \tag{26}$$

The relative error of the fourth path delay is

$$\frac{6.75}{35} = 0.19$$

which is greater than 10 % as a consequence of which the condensed information does not yet fulfil the quality requirement.

The smallest value in matrix F of (23) is 35 and now has to be advertised via an additional exceptional link, to be added to the virtual complex node A. This exceptional link interconnects the outputs of node A corresponding to nodes A.8 and A.7 in subnetwork SNA, and is drawn in Fig. 6. The matrix M is adapted by eliminating the row therein corresponding to the path delay value 35 and thus becomes:

$$M = \begin{pmatrix} 1 & 1 & 0 & 0 \\ 1 & 0 & 1 & 0 \\ 1 & 0 & 0 & 1 \\ 0 & 1 & 0 & 1 \end{pmatrix} \tag{27}$$

The vector F is reduced to

$$F = \begin{pmatrix} 72 \\ 77 \\ 72 \\ 57 \end{pmatrix} \tag{28}$$

and the condensed information X again is calculated by applying formula (8):

$$X = \begin{pmatrix} 43.5 \\ 28.5 \\ 33.5 \\ 28.5 \end{pmatrix} \tag{29}$$

As may be expected since formula (8) is no longer an overconstrained problem, the path delays calculated from the condensed information, M.X, now equal the values in F:

$$M.X = \begin{pmatrix} 72 \\ 77 \\ 72 \\ 57 \end{pmatrix} \tag{30}$$

The quality requirement thus is fulfiled after two iteration steps wherein unbalanced information is determinad and excluded for condensation. In this way, maximal condensation is obtained, given the 10 % accuracy requirement to be fulfilled.

Applying the same procedure to subnetwork SNB results in advertising 5 exceptional links in virtual complex node B. The result thereof is drawn in Fig. 7.

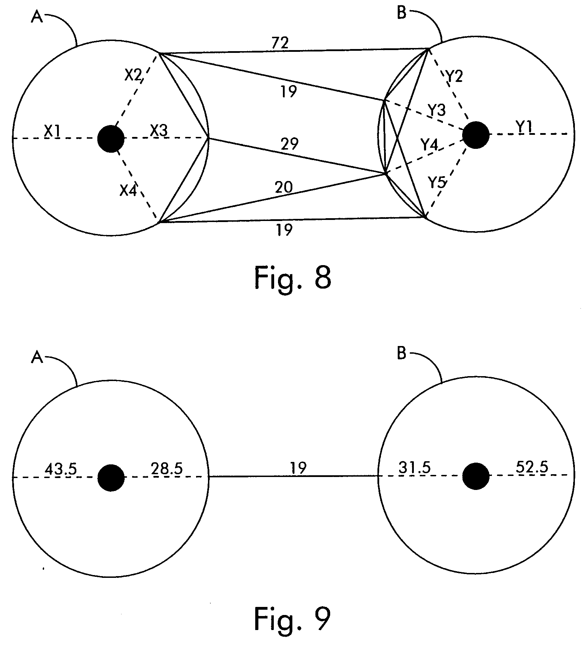

In a second phase, the information related to the links in between subnetworks SNA and SNB again has to be condensed. Starting from Fig. 8 and selecting therein the path with shortest delay between the two nuclei gives rise to what is drawn in Fig. 9. From Fig. 9, it is deduced that the delay from node A.1 to node B.7 is 175 time units, which is exactly the delay of the shortest path between these nodes in Fig. 1.

It is to be noticed that, for the sake of simplicity, only delay information is aggregated in the above described implementations of the present invention. This delay information is additive information. From the described implementations however, any person skilled in the art can derive in a straightforward way how multi-parameter information aggregation can be realised according to the present invention. The set of equations (4) is then expressed via a block matrix representation. The elements of vector F, which were delay values in the above described implementations, become parameter vectors with more than one component, and the selection of unbalanced elements out of this vector F will be based on a magnitude -for instance the Euclidean magnitude - of the different parameter vectors.

It is also a remark that applicability of the present invention is not limited to any particular structure of the virtual complex nodes A and B. In the above described examples, the complex node structure of the PNNI (Private Network-Network Interface) Specification was used. Therein, as already explained, a virtual complex node has a nucleus, which can be interpreted as a fictitious point of gravity, spokes which represent default virtual links, and exceptional virtual links between inputs and outputs of the complex node. As will be appreciated by a person skilled in the art, the structure of the virtual complex node, and the definition of the default virtual links and exceptional virtual links have no limitative effect on the applicability of the present invention.

Yet another remark is that although in the above described implementations of the present invention, quality of service information parameter information was condensed, the present invention also can be used in other communication networks than ATM (Asynchronous Transfer Mode) networks, the internet for instance, to condense other information than quality of service information therein. The internet for example is a two layer hierarchically structured network wherein information with respect to hop count, administrative weight, delay, or combinations of these parameters can be aggregated from the first hierarchical level to the second in accordance with the principles of the present invention. Moreover, as already indicated in the introductory part of this application, use of the present aggregation method is even not limited to the field of communication networks.

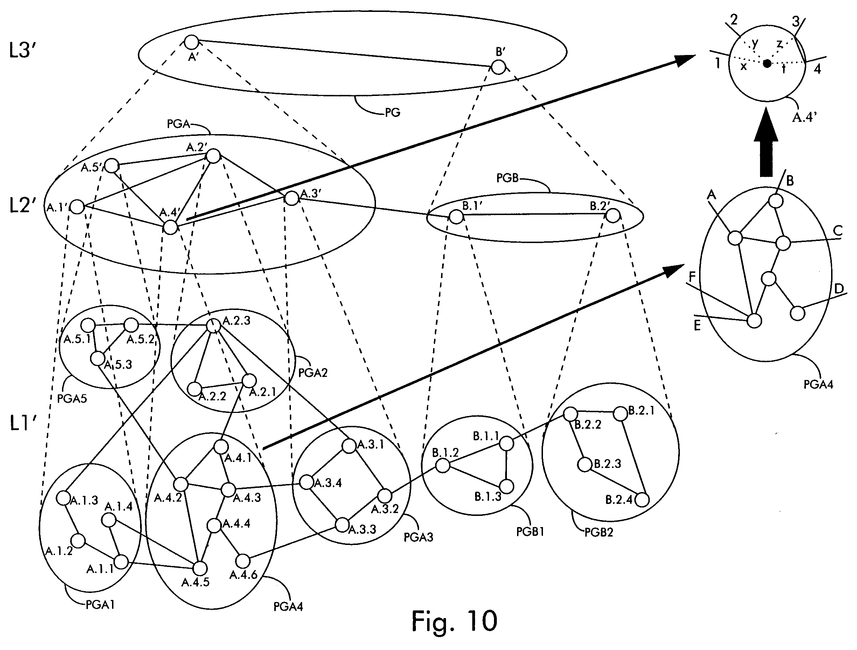

Furthermore, it is remarked that the principles of the present invention, explained here above for the condensation of delay information in a network with two hierarchical levels L1 and L2, can be extended in a straightforward way to more complex networks with more than two hierarchical levels. The method according to the present invention then can be used for information aggregation between any two successive levels in the hierarchy. Such a more complex network with three hierarchical levels L1', L2', and L3' is drawn in Fig. 10. On the lowest hierarchical level, L1', the physical network links and nodes are grouped in 7 different subnetworks or peer groups: peer group PGA1 comprises nodes A.1.1, A.1.2, A.1.3 and A.1.4, peer group PGA2 comprises nodes A.2.1, A.2.2 and A.2.3, peer group PGA3 comprises nodes A.3.1, A.3.2, A.3.3 and A.3.4, peer group PGA4 comprises nodes A.4.1, A.4.2, A.4.3, A.4.4, A.4.5 and A.4.6, peer group PGA5 comprises nodes A.5.1, A.5.2 and A.5.3, peer group PGB1 comprises nodes B.1.1, B.1.2 and B.1.3, and peer group PGB2 comprises nodes B.2.1, B.2.2, B.2.3 and B.2.4. On the second hierarchical level L2', each of this peer groups PGA1, PGA2, PGA3, PGA4, PGA5, PGB1 and PGB2 is represented by a virtual complex node, A.1', A.2', A.3', A.4', A.5', B.1' and B.2' respectively. The parameter information related to the links and nodes on the first hierarchical level L1' is aggregated into parameter information of the second hierarchical level L2' by applying the present method. The virtual complex nodes A.1', A.2', A.3', A.4', A.5', B.1' and B.2', and the virtual links which interconnect these nodes on the second hierarchical level L2' again can be grouped into peer groups, and each peer group again can be represented on a higher hierarchical level L3' by a single complex node. In Fig. 10, the second hierarchical level L2' comprises two peer groups, PGA and PGB, the first of which PGA includes nodes A.1', A.2', A.3', A.4' and A.5', and the second of which PGB comprises nodes B.1' and B.2'. Using the present invention, the parameter information related to links and nodes of the second hierarchical level L2 again can be condensed to thereby generate parameter information for the complex nodes A' and B' which represent peer groups PGA and PGB on the third hierarchical level L3' respectively. On the right-hand side of Fig. 10, the structure of the virtual complex node A.4', which represents peer group PGA4, having input/outputs A, B, C, D, E and F, on the second hierarchical level L2' is drawn in detail. This virtual complex node A.4 includes a nucleus, four default virtual links x, y, z and t, interconnecting the nucleus with respective inputs/outputs 1, 2, 3 and 4, and one exceptional virtual link between input/outputs 3 and 4.

While the principles of the invention have been described above in connection with specific apparatus, it is to be clearly understood that this description is made only by way of example and not as a limitation on the scope of the invention.

## Claims

1.  Method to aggregate in a hierarchically structured network parameter information related to nodes (A.1, A.2, A.3, A.4, A.5, A.6, A.7, A.8) and links of a subnetwork (SNA) on a first hierarchical level (L1) to thereby generate parameter information (X1, X2, X3, X4) related to virtual links of a virtual complex node (A) which represents said subnetwork (SNA) on a second hierarchical level (L2), said second hierarchical level (L2) being a condensed abstraction of said first hierarchical level (L1),

CHARACTERIZED IN THAT said method comprises the steps of:

a. determining unbalanced parameter information and balanced parameter information amongst said parameter information of said subnetwork (SNA);
b. condensing said balanced parameter information to thereby generate a first part of said parameter information (X1, X2, X3, X4) of said virtual complex node (A); and
c. advertising said unbalanced parameter information uncondensed by adding at least one exceptional virtual link to said virtual complex node (A) to thereby generate a second part of said parameter information thereof.

2. Method according to claim 1,
CHARACTERIZED IN THAT said balanced parameter information is condensed using heuristic techniques.

3. Method according to claim 1,
CHARACTERIZED IN THAT said balanced parameter information is condensed by respecting in a near-optimal way mathematical bounds, each mathematical bound requiring an input/output characteristic value of said subnetwork (SNA) to equal a corresponding input/output characteristic value of said virtual complex node (A).

4. Method according to claim 3,
CHARACTERIZED IN THAT for a particular input and a particular output of said subnetwork (SNA), said input/output characteristic value is on optimal value amongst input/output characteristic values calculated for different paths interconnecting said particular input and said particular output within said subnetwork (SNA).

5. Method according to claim 4,
CHARACTERIZED IN THAT an input/output characteristic value for a path interconnecting said particular input and said particular output is calculated by adding said parameter information related to said nodes and said links of said subnetwork (SNA) which constitute said path.

6. Method according to claim 4,
CHARACTERIZED IN THAT an input/output characteristic value for a path interconnecting said particular input and said particular output is calculated by either minimizing or maximizing said parameter information related to said nodes and said links of said subnetwork (SNA) which constitute said path.

7. Method according to claim 1,
CHARACTERIZED IN THAT a magnitude metric is used to calculate a magnitude for said parameter information of said subnetwork (SNA) to determine said unbalanced parameter information and said balanced parameter information.

8. Method according to claim 7,
CHARACTERIZED IN THAT said magnitude metric is the Euclidean magnitude metric.

9. Method according to claim 7,
CHARACTERIZED IN THAT said parameter information is determined to be unbalanced if said magnitude falls outside a predetermined magnitude interval.

10. Method according to claim 1,
CHARACTERIZED IN THAT said step of determining said unbalanced and said balanced information, and said step of condensing said balanced parameter information are iteratively repeated, thereby adapting said unbalanced and balanced parameter information until said first part of said parameter information of said virtual complex node (A) fulfils a predetermined requirement.

11. Method according to claim 10,
CHARACTERIZED IN THAT said predetermined requirement is an accuracy level which defines a minimal degree for the relative correctness of said parameter information (X1, X2, X3, X4) of said virtual complex node (A).

12. Method according to claim 11,
CHARACTERIZED IN THAT said accuracy level is a quality threshold.

13. Method according to claim 11,

CHARACTERIZED IN THAT said accuracy level is a Gaussian threshold.

**14.** Method according to claim 1,
CHARACTERIZED IN THAT said network is a communications network, said parameter information of said subnetwork (SNA) being quality of service information related to said nodes (A.1, A.2, A.3, A.4, A.5, A.6, A.7, A.8) and links thereof, and said virtual complex node (A) having a structure as specified in the Private Network-Network Interface (PNNI) of the Asynchronous Transfer Mode Forum (ATM Forum).

**15.** Method according to claim 1,
CHARACTERIZED IN THAT said method comprises an additional step of interaction between said virtual complex node (A) and another virtual complex node (B), wherein parameter information related to virtual links of said virtual complex node (A) and said other virtual complex node (B) and parameter information related to virtual links in between said virtual complex node (A) and said other virtual complex node (B) is removed for each virtual link which does not form part of at least one optimal path between said virtual complex node (A) and said other virtual complex node (B).

**16.** Method according to claim 14 and claim 15,
CHARACTERIZED IN THAT each optimal path of said at least one optimal path is an optimal path between a nucleus of said virtual complex node (A) and a nucleus of said other virtual complex node (B).

**17.** Arrangement to be used in a leader node (A.4) of a subnetwork (SNA) of a first level (L1) of a hierarchically structured network to aggregate parameter information related to nodes (A.1, A.2, A.3, A.4, A.5, A.6, A.7, A.8) and links of said subnetwork (SNA) and to thereby generate parameter information (X1, X2, X3, X4) related to virtual links of a virtual complex node (A) adapted to represent said subnetwork on a second hierorchical level (L2), said second hierarchical level (L2) being a condensed abstraction of said first hierarchical level (L1),
CHARACTERIZED IN THAT said arrangement comprises:

a. determination means, to an input of which said parameter information of said subnetwork (SNA) is applied, said determination means being adapted to determine unbalanced parameter information and balanced parameter information amongst said parameter information of said subnetwork (SNA);
b. condensation means, coupled between a first output of said determination means and an input of a memory wherein said parameter information (X1, X2, X3, X4) of said virtual complex node (A) is memorized, said condensation means being adapted to condense said balanced parameter information of said virtual complex node (A); and
c. advertising means, coupled between a second output of said determination means and said input of said memory, and adapted to advertise said unbalanced parameter information uncondensed and to thereto add at least one exceptional virtual link to said virtual complex node (A) so as to generate a second part of said parameter information thereof.

Fig. 1

EP 0 892 522 A1

Fig. 2

Fig. 3

EP 0 892 522 A1

Fig. 4

Fig. 5

Fig. 6

Fig. 7

EP 0 892 522 A1

Fig. 8

Fig. 9

EP 0 892 522 A1

Fig. 10

EP 0 892 522 A1

| European Patent Office | EUROPEAN SEARCH REPORT | Application Number |
|---|---|---|
| | | EP 97 40 1706 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | LEE W C: "TOPOLOGY AGGREGATION FOR HIERARCHICAL ROUTING IN ATM NETWORKS" COMPUTER COMMUNICATIONS REVIEW, vol. 25, no. 2, 1 April 1995, pages 82-92, XP000570739 * paragraph 2 * * paragraph 6 * * paragraph 7 * | 1-17 | H04L12/00 H04L12/56 |
| D,A | US 5 535 195 A (LEE WHAY C) * the whole document * | 1-17 | |
| A | LEE K J ET AL: "DISTRIBUTED ROUTING USING TOPOLOGY DATABASE IN LARGE COMPUTER NETWORKS" NETWORKS: EVOLUTION OR REVOLUTION?, NEW ORLEANS, MAR. 27 - 31, 1988, no. 1988, 27 March 1988, INSTITUTE OF ELECTRICAL AND ELECTRONICS ENGINEERS, pages 593-602, XP000043740 * paragraph 3.2 * | 1-17 | TECHNICAL FIELDS SEARCHED (Int.Cl.6) H04L |

The present search report has been drawn up for all claims

| Place of search | Date of completion of the search | Examiner |
|---|---|---|
| THE HAGUE | 5 December 1997 | Perez Perez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)